# EUROPÄISCHE PATENTSCHRIFT

(11) **EP 2 753 858 B1**
(45) Veröffentlichungstag und Bekanntmachung des Hinweises auf die Patenterteilung: **11.11.2015**
(21) Anmeldenummer: 11754304.1
(22) Anmeldetag: 06.09.2011
(51) Int. Cl.: F16L 33/035

(54) **SCHLAUCHKLEMME**
HOSE CLAMP
COLLIER DE SERRAGE

(43) Veröffentlichungstag der Anmeldung: 16.07.2014
(73) Patentinhaber: Oetiker Schweiz AG, 8810 Horgen (CH)
(72) Erfinder: MIESSMER, Stefan, CH-8004 Zürich (CH)
(74) Vertreter: Strehl Schübel-Hopf & Partner
(86) Internationale Anmeldenummer: PCT/EP2011/004482
(87) Internationale Veröffentlichungsnummer: WO 2013/034162

(56) Entgegenhaltungen:
- US-A- 1 804 725

## Beschreibung

### Stand der Technik

Eine offene Schlauchklemme, bei der die beiden Endabschnitte des Klemmbandes mit gezahnten Bereichen zum gegenseitigen Eingriff im überlappten Zustand versehen sind, ist aus US 4,053,965 bekannt. Um die beiden Endbereiche in Eingriff miteinander zu halten, ist daran gedacht, einen dort nicht näher erläuterten Clip oder dergleichen vorzusehen.

Aus US 3,078,532 ist ein solcher Clip bekannt, der die beiden Enden des hier insgesamt gezahnten Klemmbandes ringartig umgibt. Ein solcher ringartiger Clip stellt ein zusätzliches Bauteil dar, das verloren gehen kann und den Montagevorgang erschwert. Ferner steht er gegenüber der Innenfläche der Klemme hervor und ist daher im Hinblick auf die Dichtigkeit an der Abbindestelle problematisch.

Aus US 1,804,725 ist eine Schlauchklemme mit den im Oberbegriff des Anspruchs 1 angegebenen Merkmalen bekannt. Einer der beiden gezahnten Bereiche ist dort an der Außenseite einer Zunge, der andere an der Innenseite eines erhabenen Bereichs ausgebildet, der in Umfangsrichtung der Klemme eine Einführöffnung für die Zunge aufweist. Der erhabene Bereich weist einen eine innere Begrenzung der Einführöffnung bildenden Steg auf, der zwischen der Zunge und dem zu klemmenden Schlauch liegt. Dieser Steg stellt eine Unebenheit an der dem Schlauch zugewandten Innenseite der Schlauchklemme dar, so dass sich diese nur für verhältnismäßig dicke und weiche Schläuche eignet. Ferner bildet der Steg zwischen der Zunge und dem Schlauch einen Abstand, der beim Spannen der Schlauchklemme überwunden werden muss.

Bei der bekannten Schlauchklemme ist auch die Unterseite der Zunge gezahnt, so dass beim Spannen erhebliche Reibungskräfte auftreten, die den Schlauch in Umfangsrichtung mitzunehmen suchen. Die dadurch im Schlauch verursachten Verformungen können zu Undichtigkeiten zwischen dem Schlauch und dem darunter liegenden Gegenstand, etwa einem Rohrnippel, führen.

### Abriss der Erfindung

Der Erfindung liegt die Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine Schlauchklemme anzugeben, die einfach zu schließen und zu spannen ist und die eine über ihren gesamten Umfang glatte Innenfläche bildet, so dass die Gefahr von Undichtigkeiten verringert ist.

Die Lösung dieser Aufgabe gelingt mit der in Anspruch 1 definierten Schlauchklemme. Danach durchsetzt die an ihrer Außenseite gezahnte Zunge einen Durchbruch, der in einer im anderen Endabschnitt des Klemmbandes vorhandenen Stufe ausgebildet ist. Dadurch wird der beim Stand der Technik erforderliche Clip oder Steg vermieden, so dass über den gesamten Umfang eine von Vorsprüngen und Lücken freie glatte Innenfläche ermöglicht wird und Undichtigkeiten vermieden werden.

Die Ausgestaltung der Erfindung nach den Ansprüchen 2 und 3 führt dazu, dass im gespannten Zustand der Klemme unter dem erhabenen Bereich keine Lücke entsteht, so dass auch in diesem Bereich der Schlauch gegen den darunter liegenden Gegenstand gedrückt wird und Undichtigkeiten vermieden werden.

In der Weiterbildung der Erfindung nach den Ansprüchen 4 und 5 wird eine etwaige Lücke am Ende des mit dem erhabenen Bereich versehenen Klemmband-Endabschnitts vermieden, so dass auch hier die Gefahr von Undichtigkeiten beseitigt wird.

Die Maßnahme des Anspruchs 6 dient der seitlichen Führung des inneren Klemmbandendes derart, dass dieses beim Schließen und Spannen der Klemme nicht seitlich ausweichen kann. Die in Anspruch 7 angegebene Gestaltung gestattet ein Ineinanderhaken der Klemmbandenden im noch nicht gespannten Zustand und damit dem erleichterten Ansetzen eines Spannwerkzeugs.

In der Gestaltung der Schlauchklemme nach Anspruch 8 lässt sich deren Spannzustand visuell feststellen.

Die Maßnahmen der Ansprüche 9 bis 13 sind zum Ansetzen eines beispielsweise zangenartigen Spannwerkzeugs günstig. Dabei ist die Gestaltung nach Anspruch 11 insofern zweckmäßig, als die Gefahr von Beschädigungen des Schlauches durch das Spannwerkzeug vermieden wird. In der Ausbildung nach Anspruch 12 wirkt eine der Spanneinrichtungen gleichzeitig als Knickschutz, in der weiteren Ausbildung nach Anspruch 13 auch als Anschlag zur Begrenzung der Schließbewegung der Schlauchklemme.

Die Gestaltung der Schlauchklemme nach Anspruch 14 eignet sich insbesondere für Airbags, wobei die im inneren Klemmbandabschnitt vorgesehenen Durchbrüche eine Verankerung im Airbag-Material bewirken.

In der Weiterbildung nach Anspruch 15 eignet sich die Schlauchklemme für eine mit einer Schnecke arbeitende Spanneinrichtung.

### Kurzbeschreibung der Zeichnungen

Ausführungsbeispiele der Erfindung werden nachstehend anhand der Zeichnungen näher erläutert. Darin zeigen:
Fig. 1 eine perspektivische Darstellung einer Schlauchklemme gemäß einem ersten Ausführungsbeispiel im geschlossenen, aber noch nicht gespannten Zustand;
Fig. 2 und 3 eine perspektivische Darstellung bzw. eine Seitenansicht der Schlauchklemme nach Fig. 1 im gestreckten Zustand;
Fig. 4 eine Seitenansicht der Schlauchklemme nach Fig. 1 bis 2 im geschlossenen, aber noch nicht gespannten Zustand;
Fig. 5 eine vergrößerte Draufsicht auf einen Teil einer Schlauchklemme nach Fig. 1 bis 4;
Fig. 6 eine Draufsicht auf die Zunge der Schlauchklemme gemäß einer weiteren Variante;
Fig. 7 eine der Fig. 1 ähnliche perspektivische Darstellung einer Schlauchklemme gemäß einem zweiten Ausführungsbeispiel im geschlossenen, aber noch nicht gespannten Zustand;
Fig. 8 eine wiederum der Fig. 1 ähnliche perspektivische Darstellung einer Schlauchklemme gemäß einem dritten Ausführungsbeispiel im geschlossenen, aber noch nicht gespannten Zustand;
Fig. 9 eine der Fig. 2 ähnliche perspektivische Darstellung der Schlauchklemme nach Fig. 8 im gestreckten Zustand; und
Fig. 10 und 11 Seitenansichten eines Teils der Schlauchklemme nach Fig. 8 und 9 im geschlossenen bzw. im gespannten Zustand.

### Ausführungsbeispiele

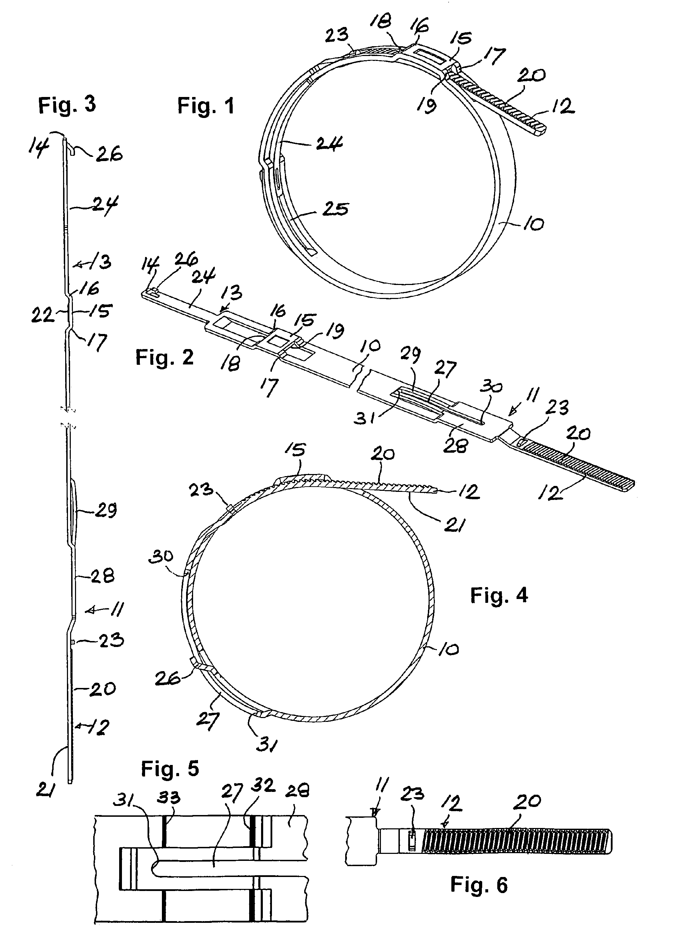

Die in Fig. 1 bis 4 gezeigte Schlauchklemme besteht aus einem Klemmband **10,** dessen erster Endabschnitt **11** in einer ersten Zunge **12** endet, deren Breite geringer ist als die volle Breite des Klemmbandes **10,** und dessen zweiter Endabschnitt **13** in Abstand von seinem freien Ende **14** einen erhabenen Bereich **15** aufweist, der mit einer vom Ende **14** aus gesehen nach außen springenden ersten Stufe **16** beginnt und mit einer nach innen zurückführenden und zu der ersten Stufe **16** symmetrischen zweiten Stufe **17** endet. Die Höhe der Stufen **16, 17** ist im Wesentlichen gleich der Dicke des Kemmbandes **10.** In der ersten Stufe **16** ist ein Durchbruch **18,** in der zweiten Stufe **17** ein Durchbruch **19** zum Durchtritt der Zunge **12** vorgesehen. Fig. 1 zeigt die Schlauchklemme in einem vorgebogenen, geschlossenen aber noch nicht gespannten Zustand, in dem die Zunge **12** den Durchbrüche **18** und **19** durchsetzt.

Die Zunge **12** ist an ihrer Außenseite mit einem gezahnten Bereich **20** versehen, dessen Zähne sägezahnartig mit einer zur Bandoberfläche im Wesentlichen senkrechten Flanke und einer der Spitze der Zunge **12** zugewandten schrägen Flanke gestaltet sind. Die bezüglich der gebogenen Schlauchklemme radial innere Fläche **21** der Zunge **12** ist glatt.

Wie aus Fig. 3 und 4 ersichtlich, weist der zweite Endabschnitt **13** in dem erhabenen Bereich **15** an seiner Innenfläche einen gezahnten Bereich **22** auf. Auch die Zähne des gezahnten Bereichs **22** sind sägezahnartig mit einer zur Bandoberfläche senkrechten Flanke und einer dem freien Ende **14** zugewandten schrägen Flanke gestaltet. Die Teilung der Zähne des gezahnten Bereichs **22** kann das Doppelte oder ein Mehrfaches der Teilung des gezahnten Bereichs **20** an der Zunge **12** sein. Günstig ist es, die Teilung bei dem gezahnten Bereich **20** der Zunge **12** möglichst klein zu machen, um den Durchmesser der Schlauchklemme beim Spannen möglichst genau auf das gewünschte Maß bringen zu können.

Die in Fig. 1 bis 4 gezeigte Schlauchklemme wird axial in Position gebracht oder nach Öffnen um den zu spannenden Gegenstand, etwa einen Rohrnippel mit einem auf diesen aufgeschobenen Schlauch, herumgelegt, woraufhin die Zunge **12** durch die Durchbrüche **18** und **19** hindurchgeführt wird, wobei die gezahnten Bereiche **20, 22** ineinander rasten. Beim anschließenden Spannen schiebt sich die Zunge **12** weiter durch die Durchbrüche **18, 19** hindurch. Gleichzeitig wird der zwischen den Stufen **16** und **17** liegende gezahnte Bereich **22** des zweiten Bandendabschnitts **13** gegen den gezahnten Bereich **20** der Zunge **12** gepresst. Damit wird ein selbsttätiges Öffnen der Schlauchklemme unmöglich.

Zum Spannen kann ein (nicht dargestelltes) Spannwerkzeug verwendet werden, dessen Spannelemente einerseits sich an der zweiten Stufe **17** abstützen und andererseits an der Zunge **12** ziehen. Alternativ ist es auch möglich, an geeigneten Stellen der beiden Endabschnitte **11, 13** Vertiefungen zum Eingriff von zugespitzten Enden einer Zange (ähnlich einer Seegerringzange) oder auf dem erhabenen Bereich **15** einen Spannhaken zum Ansetzen einer Zange (ähnlich einer Kabelbinderzange) vorzusehen.

Der zweite Endabschnitt **13** des Klemmbandes **10** endet in einer zweiten Zunge **24,** die schmäler ist als das Klemmband **10.** Die Zunge **24** wird von einem im ersten Endabschnitt **11** vorhandenen Kanal **25** aufgenommen und trägt am Ende an ihrer Außenseite einen Führungshaken **26,** der in Richtung des ersten Endabschnitts **11** offen ist. Wie aus Fig. 4 ersichtlich, durchsetzt dieser Führungshaken **26** im geschlossenen und im gespannten Zustand der Schlauchklemme einen Führungsschlitz **27,** der in einem an das innere Ende der ersten Zunge **12** angrenzenden nach außen gekröpften Bereich **28** des ersten Endabschnitts **11** und einer daran anschließenden, aus dem Klemmband **10** herausgewölbten Abdeckung **29** des Kanals **25** ausgebildet ist. Die Abdeckung **29** verhindert, dass die Zunge **24** gegenüber der Schlauchklemme nach außen vorsteht.

Im geschlossenen Zustand sucht die Schlauchklemme wegen der ihr innewohnenden Spannung sich zu öffnen. Dies wird dadurch verhindert, dass sich der Führungshaken **26** an dem der ersten Zunge **12** benachbarten Ende **30** des Führungsschlitzes **27** einhängt. Da die montierte Schlauchklemme auf diese Weise in ihrem geschlossenen Zustand gehalten wird, läßt sich der anschließende Spannvorgang problemlos durchführen.

Fig. 5 zeigt einen vergrößerten Teil des Klemmbandes **10** im Bereich des vom ersten Endabschnitt **11** abgewandten Endes **31** des Führungsschlitzes **27.** Bei richtiger Wahl der Klemmengröße und ordnungsgemäßer Spannung soll sich der Führungshaken **26** zwischen den an diesem Bereich vorgesehenen Markierungslinien **32** und **33** befinden. Damit ist eine visuelle Kontrolle der Klemmenspannung geschaffen.

Wie in Fig. 6 gezeigt, kann der gezahnte Bereich **20** der ersten Zunge **12,** anders als in Fig. 1 und 2 dargestellt, schräg zur Längsachse des Klemmbandes **10** verlaufende Zähne aufweisen. In dieser Ausgestaltung eignet sich die Schlauchklemme für eine mit einer (nicht dargestellten) Schnecke arbeitende Spanneinrichtung.

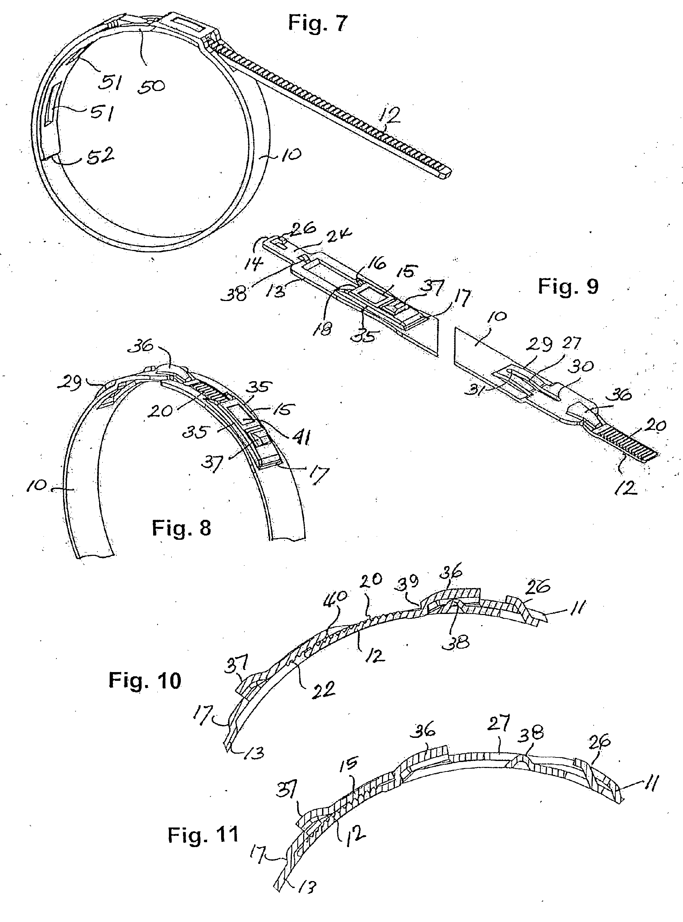

Das Ausführungsbeispiel nach Fig. 7 unterscheidet sich von dem nach Fig. 1 bis 4 darin, dass der zweite Endabschnitt **50** durchgehend die volle Breite des Klemmbandes hat und mit einer Reihe von Durchbrüchen **51** versehen ist. Diese Gestaltung eignet sich beispielsweise für Airbags, bei denen sich die Öffnungen **51** in dem verhältnismäßig weichen Stoff des Airbags verhaken können. Ferner sind die in Fig. 2 gezeigten Ausformungen **27...31** im ersten Endabschnitt weggelassen, so dass das Ende **52** des zweiten Endabschnitts **40** im Innern der geschlossenen Klemme eine Stufe bildet.

Das in Fig. 8 bis 11 gezeigte weitere Ausführungsbeispiel unterscheidet sich von dem nach Fig. 1 bis 6 dadurch, dass die Zungen **12** und **24** kürzer ausgebildet sind. Ferner hat der erhabene Bereich **15** zwischen den beiden Stufen **16, 17** seitliche Stege **35,** die im geschlossenen und im gespannten Zustand der Schlauchklemme auf beiden Seiten der Zunge **12** liegen. Der so gebildete seitlich geschlossene Käfig erhöht die von der Schlauchklemme im Bereich der Zunge **12** auf den Schlauch ausgeübte Flächenpressung.

Die Stufe **17** kann, wenn die erste Zunge **12** entsprechend kurz ist, geschlossen sein. Bei größerer Zungenlänge oder um eine größere Durchmesserreduktion der Schlauchklemme zuzulassen, wird die Stufe ebenso wie in den Ausführungsbeispielen nach Fig. 1 bis 7 mit einem Durchbruch versehen, durch den die Zunge **12** zur Vermeidung von Reibung austreten kann.

Zum Spannen dieser Schlauchklemme ist auf dem der ersten Zunge **12** benachbarten Teil des Klemmbandes **10** ein etwas nach außen vorspringender Spanntunnel **36** und auf dem erhabenen Bereich **15** zwischen der ersten und der zweiten Stufe **16** und **17** des zweiten Endabschnitts **13** ein nach außen vorspringender Spannhaken **37** angeformt, an denen sich ein zangenartiges Spannwerkzeug ansetzen lässt. Der Spanntunnel **36** übergreift die Stufe zwischen der ersten Zunge **12** und dem anschließenden Teil des Klemmbandes **10** und bildet somit gleichzeitig einen Knickschutz.

Wie ferner aus Fig. 9 bis 11 ersichtlich, kann auf der zweiten Zunge **24** an einer gegenüber dem Führungshaken **26** weiter vom Ende **14** des zweiten Endabschnitts **13** entfernten Stelle eine aus dem Klemmband **10** herausgedrückte Nase **38** vorgesehen sein, die in Verbindung mit der Innenfläche des Spanntunnels **36** eine Sperre gegen unbeabsichtigte Durchmesserverringerung der Schlauchklemme während des Transports bildet; siehe insbesondere Fig. 10.

Wie aus Fig. 10 und 11 hervorgeht, bildet das von der ersten Zunge **12** abgewandte Ende des Spanntunnels **36** einen Absatz **39,** der in Verbindung mit der Kante **40** eines im zweiten Endabschnitt **13** ausgeschnittenen Fensters **41** einen Anschlag zur Begrenzung der Schließbewegung bildet.

Die anhand von Fig. 5 und 6 erläuterten Merkmale (Markierungslinien, Schrägverzahnung) können auch bei dem Ausführungsbeispiel nach Fig. 8 bis 11 vorgesehen werden. Ebenso sind die anhand von Fig. 9 bis 11 erläuterten Maßnahmen zur Begrenzung der Schließbewegung und zur Verhinderung unbeabsichtigter Durchmesserverkleinerung auch bei dem Ausführungsbeispiel nach Fig. 1 bis 6 anwendbar. Des Weiteren ist die nach Fig. 8 bis 11 erläuterte Maßnahme (Käfig) zur Erhöhung der auf das Abbindegut ausgeübten Flächenpressung ebenfalls bei dem Ausführungsbeispiel nach Fig. 1 bis 6 anwendbar.

### Bezugszeichen

- **10**: Klemmband
- **11**: erster Endabschnitt
- **12**: erste Zunge
- **13**: zweiter Endabschnitt
- **14**: Ende (von **13)**
- **15**: erhabener Bereich
- **16**: erste Stufe
- **17**: zweite Stufe
- **18, 19**: Durchbrüche
- **20**: gezahnter Bereich
- **21**: Innenfläche
- **22**: gezahnter Bereich
- **23**: Vorsprung
- **24**: zweite Zunge
- **25**: Kanal
- **26**: Führungshaken
- **27**: Führungsschlitz
- **28**: gekröpfter Bereich
- **29**: Abdeckung
- **30, 31**: Enden der Führungsschlitzes
- **32, 33**: Markierungslinien
- **35**: Stege
- **36**: Spanntunnel
- **37**: Spannhaken
- **38**: Nase
- **39**: Absatz
- **40**: Kante
- **41**: Fenster
- **50**: zweiter Endabschnitt
- **51**: Durchbrüche
- **52**: Ende (von **50)**

## Patentansprüche

1. Schlauchklemme mit einem Klemmband **(10),** dessen Enden im montierten Zustand einander überlappende Endabschnitte **(11, 13)** bilden, die an einander zugewandten Flächen gezahnte Bereiche **(20, 22)** aufweisen, und einer Halteeinrichtung, die die gezahnten Bereiche **(20, 22)** in gegenseitigem Eingriff hält, wobei der gezahnte Bereich **(20)** eines ersten Endabschnitts **(11)** an der Außenseite einer ersten Zunge **(12)** ausgebildet ist, deren Breite geringer ist als die volle Bandbreite, und die Halteeinrichtung einen im zweiten Endabschnitt **(13)** ausgebildeten erhabenen Bereich **(15)** aufweist, der an seiner Innenseite den anderen gezahnten Bereich **(22)** trägt und eine in Umfangsrichtung weisende Öffnung **(18)** zum Hindurchstecken der ersten Zunge **(12)** bildet,
**dadurch gekennzeichnet, dass** der erhabene Bereich **(15)** in Abstand vom freien Ende des zweiten Endabschnitts **(13)** mit einer nach außen springenden ersten Stufe **(16)** beginnt, deren Höhe der Dicke des Klemmbandes **(10)** entspricht, und die Öffnung zum Hindurchstecken der ersten Zunge **(12)** ein Durchbruch **(18)** in der ersten Stufe **(16)** ist.

2. Schlauchklemme nach Anspruch 1, wobei die Halteeinrichtung auf der vom zweiten Bandende **(14)** abgewandten Seite der ersten Stufe **(16)** eine nach innen springende zweite Stufe **(17)** mit einem Durchbruch zum Hindurchstecken der ersten Zunge **(12)** aufweist.

3. Schlauchklemme nach Anspruch 1, wobei die Halteeinrichtung auf der vom zweiten Bandende **(14)** abgewandten Seite der ersten Stufe **(16)** eine nach innen springende zweite Stufe **(17)** aufweist und der Bereich zwischen den beiden Stufen **(16, 17)** seitliche Stege **(35)** bildet, die im geschlossenen Zustand der Schlauchklemme auf beiden Seiten der ersten Zunge **(12)** liegen.

4. Schlauchklemme nach einem der vorhergehenden Ansprüche, wobei der zweite Endabschnitt **(13)** eine zweite Zunge **(24),** deren Breite geringer ist als die volle Bandbreite, und der erste Endabschnitt **(11)** einen Kanal **(25)** zur Aufnahme der zweiten Zunge **(24)** aufweist.

5. Schlauchklemme nach Anspruch 4, wobei der Kanal **(25)** außen mit einer Abdeckung **(29)** versehen ist.

6. Schlauchklemme nach Anspruch 5, wobei die Abdeckung **(29)** einen Führungsschlitz **(27)** für einen an der zweiten Zunge **(24)** vorgesehenen, nach außen ragenden Vorsprung **(26)** aufweist.

7. Schlauchklemme nach Anspruch 6, wobei der Vorsprung einen vom zweiten Bandende abgewandten Haken **(26)** zum Eingriff in das dem ersten Bandende zugewandte Ende **(30)** des Führungsschlitzes **(27)** bildet.

8. Schlauchklemme nach Anspruch 6 oder 7, wobei an dem Führungsschlitz **(27)** Markierungen **(32, 33)** zur visuellen Feststellung des Spannzustandes der Schlauchklemme angeordnet sind.

9. Schlauchklemme nach einem der vorhergehenden Ansprüche, wobei die beiden Endabschnitte **(11, 13)** jeweils eine Einrichtung **(17, 23; 36, 37)** zum Ansetzen eines Spannwerkzeugs aufweisen.

10. Schlauchklemme nach Anspruch 9, wobei die Einrichtungen zum Ansetzen eines Spannwerkzeugs nach außen ragende Vorsprünge **(17, 23; 36, 37)** sind.

11. Schlauchklemme nach Anspruch 10, wobei die Vorsprünge **(36, 37)** in Teilen des Klemmbandes **(10)** ausgebildet sind, die im gespannten Zustand der Klemme über der jeweiligen Zunge **(12, 24)** liegen.

12. Schlauchklemme nach Anspruch 10, wobei einer der Vorsprünge **(36)** eine zwischen der ersten Zunge **(12)** und dem anschließenden Teil des Klemmbandes **(10)** vorhandene Stufe übergreift.

13. Schlauchklemme nach Anspruch 10, wobei einer der Vorsprünge **(36)** eine einen Absatz **(39)** aufweist, der zur Begrenzung der Schließbewegung der Klemme mit einer Kante im anderen Klemmbandabschnitt zusammenwirkt.

14. Schlauchklemme nach einem der Ansprüche 1 bis 3, wobei der innere Klemmband-Endabschnitt **(50)** mit Durchbrüchen **(51)** versehen ist.

15. Schlauchklemme nach einem der vorhergehenden Ansprüche, wobei die Zähne der gezahnten Bereiche **(20, 22)** schräg zur Längsachse des Klemmbandes **(10)** verlaufen.

## Claims

1. A hose clamp having a clamping band **(10)** the ends of which, in the mounted condition, form mutually overlapping end portions **(11, 13)** having toothed sections **(20, 22)** at mutually facing surfaces, and retaining means holding the toothed sections **(20, 22)** in mutual engagement, wherein the toothed section **(20)** of a first end portion **(11)** is formed at the outer side of a first tongue **(12),** which has a width smaller that the full band width, and the retaining means has a raised portion **(15)** formed in the second end portion **(13),** the raised portion **(15)** carrying at its inner side the other toothed section **(22)** and forming an opening **(18)** facing in the circumferential direction for passing the first tongue **(12),**
**characterised in that** the raised portion **(15)** starts with a first outward extending step **(16)** spaced from the free end of the second end portion **(13),** the height of the step **(16)** corresponding to the thickness of the clamping band **(10),** and the opening passing the first tongue **(12)** is an aperture **(18)** in the first step **(16).**

2. The hose clamp of claim 1, wherein the retaining means has, on the side of the first step **(16)** remote from the second band end **(14),** an inward projecting second step **(17)** with an aperture for passing the first tongue **(12).**

3. The hose clamp of claim 1, wherein the retaining means has, on the side of the first step **(16)** remote from the second band end **(14),** an inward projecting second step **(17),** and the area between the two steps **(16, 17)** forms lateral webs which lie on both sides of the first tongue **(12)** in the closed condition of the hose clamp.

4. The hose clamp of any preceding claim, wherein the second end portion **(13)** has a second tongue **(24)** of a width smaller than the full band width, and the first end portion **(11)** has a channel **(25)** for receiving the second tongue **(24).**

5. The hose clamp of claim 4, wherein the channel **(25)** is provided with an outer cover **(29).**

6. The hose clamp of claim 5, wherein the cover **(29)** has a guide slot **(27)** for an outward extending projection **(26)** provided on the second tongue **(24).**

7. The hose clamp of claim 6, wherein the projection forms a hook **(26)** facing away from the second band end for engaging the end **(30)** of the guide slot **(27)** facing the first band end.

8. The hose clamp of claim 6 or 7, comprising marks **(32, 33)** at the guide slot **(27)** for visually detecting the tightening condition of the hose clamp.

9. The hose clamp of any preceding claim, wherein each end portion **(11, 13)** has means **(17, 23; 36, 37)** for engagement by a tightening tool.

10. The hose clamp of claim 9, wherein the means for engagement by a tightening tool are outward extending projections **(17, 23; 36, 37).**

11. The hose clamp of claim 10, wherein the projections **(36, 37)** are formed in parts of the clamping band **(10)** which overly the respective tongue in the tightened condition of the clamp.

12. The hose clamp of claim 10, wherein one of the projections **(36)** overlaps a step existing between the first tongue **(12)** an the adjacent part of the clamping band **(10).**

13. The hose clamp of claim 10, wherein one of the projections **(36)** has a ledge **(39)** which co-operates with an edge in the other clamping band portion for limiting the closing movement.

14. The hose clamp of any one of claims 1 to 3, wherein the inner clamping band end portion **(50)** is provided with apertures **(51).**

15. The hose clamp of any preceding claim, wherein the teeth of the toothed sections **(20, 22)** extend obliquely with respect to the longitudinal axis of the clamping band **(10).**

## Revendications

1. Collier de serrage pour tuyau comportant une bande de serrage (10) dont les extrémités forment, à l'état monté, des parties extrémités qui se chevauchent mutuellement (11, 13) et qui comportent des zones dentées (20, 22), sur des faces dirigées l'une vers l'autre et un dispositif de retenue qui maintient les zones dentées (20, 22) en prise mutuelle, dans lequel la zone dentée (20) d'une première partie d'extrémité (11) est formée sur le côté extérieur d'une première languette (12) dont la largeur est plus petite que la largeur de bande complète, et le dispositif de retenue comporte une zone surélevée (15) formée dans la seconde partie d'extrémité (13), qui supporte l'autre zone dentée (22) sur son côté intérieur et qui forme une ouverture (18) dirigée vers la direction circonférentielle pour le passage de la première languette (12),
**caractérisé en ce que** la zone surélevée (15) débute avec un premier gradin (16) faisant ressort vers l'extérieur et espacé de l'extrémité libre de la seconde partie d'extrémité (13), dont la hauteur correspond à l'épaisseur de la bande de serrage (10), et l'ouverture est une ouverture traversante (18) dans le premier gradin (16) pour le passage de la première languette (12).

2. Collier de serrage pour tuyau selon la revendication 1, dans lequel le dispositif de retenue comporte, sur le côté opposé à la seconde extrémité de bande (14) du premier gradin (16), un second gradin (17) faisant ressort vers l'intérieur avec une ouverture traversante pour le passage de la première languette (12) .

3. Collier de serrage pour tuyau selon la revendication 1, dans lequel le dispositif de retenue comporte, sur le côté du premier gradin (16) opposé à la seconde extrémité de bande (14), un second gradin (17) faisant ressort vers l'intérieur et la zone comprise entre les deux gradins (16, 17) forme des bandes latérales (35) qui sont situées des deux côtés du premier gradin (12) lorsque le collier de serrage pour tuyau est à l'état fermé.

4. Collier de serrage pour tuyau selon l'une des revendications précédentes, dans lequel la seconde partie d'extrémité (13) comporte une seconde languette (24) dont la largeur est plus petite que la largeur de bande complète, et la première partie d'extrémité (11) comporte un canal (25) pour recevoir la seconde languette (24) .

5. Collier de serrage pour tuyau selon la revendication 4, dans lequel le canal (25) est pourvu à l'extérieur d'un revêtement (29).

6. Collier de serrage pour tuyau selon la revendication 5, dans lequel le revêtement (29) comporte une fente de guidage (27) pour une saillie (26) faisant saillie vers l'extérieur, prévue sur la seconde languette (24) .

7. Collier de serrage pour tuyau selon la revendication 6, dans lequel la saillie forme un crochet (26) opposé à la seconde extrémité de bande pour venir en prise dans l'extrémité (30) de la fente de guidage (27) dirigée vers la première extrémité de bande (30).

8. Collier de serrage pour tuyau selon la revendication 6 ou 7, dans lequel des repères (32, 33) sont agencés sur la fente de guidage (27) pour déterminer visuellement l'état de serrage du collier de serrage pour tuyau.

9. Collier de serrage pour tuyau selon l'une des revendications précédentes, dans lequel les deux parties d'extrémité (11, 13) comportent respectivement des moyens (17, 23 ; 36, 37) pour appliquer un outil de serrage.

10. Collier de serrage pour tuyau selon la revendication 9, dans lequel les moyens destinés à appliquer un outil de serrage sont des saillies (17, 23 ; 36, 37) faisant saillie vers l'extérieur.

11. Collier de serrage pour tuyau selon la revendication 10, dans lequel les saillies (36, 37) sont formées dans des parties de la bande de serrage (10) qui sont au-dessus de chaque languette (12, 24) lorsque le collier de serrage pour tuyau est à l'état serré.

12. Collier de serrage pour tuyau selon la revendication 10, dans lequel l'une des saillies (36) vient en prise avec un gradin existant entre la première languette (12) et la partie adjacente de la bande de serrage (10) .

13. Collier de serrage pour tuyau selon la revendication 10, dans lequel l'une des saillies (36) comporte un épaulement (39) qui coopère avec un bord dans l'autre partie de bande de serrage afin de limiter le mouvement de fermeture du collier de serrage.

14. Collier de serrage pour tuyau selon l'une des revendications 1 à 3, dans lequel la partie d'extrémité de bande de serrage intérieure (50) est munie de passages traversants (51).

15. Collier de serrage pour tuyau selon l'une des revendications précédentes, dans lequel les dents des zones dentées (20, 22) s'étendent de biais par rapport à l'axe longitudinal de la bande de serrage (10).
